# EUROPEAN PATENT APPLICATION

(11) **EP 4 303 514 A1**
(43) Date of publication of application: **10.01.2024**
(21) Application number: 22183879.0
(22) Date of filing: 08.07.2022
(51) Int. Cl.: F27B 7/20, C04B 7/36, C04B 7/43

(54) **METHOD FOR MANUFACTURING CEMENT CLINKER AND CEMENT PLANT**

(71) Applicant: Heidelberg Materials AG, 69120 Heidelberg (DE)
(72) Inventor: Federhen, Stefan, 69120 Heidelberg (DE); Majchrowicz, Marek, 69120 Heidelberg (DE); Carrasco, Francisco, 69120 Heidelberg (DE); Principato, Michael, 69120 Heidelberg (DE)
(74) Representative: Zellentin & Partner mbB Patentanwälte

(57) **Abstract**

Method for manufacturing cement clinker comprising the steps: preheating a raw meal (rm) in a first preheater (1) using kiln off-gas to provide a partially preheated raw meal, preheating the partially preheated raw meal in a second preheater (2) to provide preheated raw meal, precalcination of the pre-heated raw meal in a calciner (4) being a fluidized bed reactor or entrained flow reactor by burning fuel (f) with oxygen (o) and recirculated calciner exhaust gas instead of air to provide a precalcined raw meal wherein at least 2 mbar overpressure are adjusted in the calciner (4), transferring the precalcined raw meal to a rotary kiln (3) for sintering to provide the cement clinker (c), cooling the cement clinker (c), and capturing carbon dioxide (CO₂) from a calciner exhaust gas in a carbon dioxide purification unit (6).

## Description

The present invention relates to a method for manufacturing cement clinker and to a cement manufacturing plant adapted to make cement clinker using the method according to the invention.

As many other industries, the cement sector faces the important challenge to reduce its CO₂ emissions, above all those from the production of clinker, to comply with the commitments of the Paris Agreement. An instructive overview of the current aproaches in carbon dioxide emmission reduction in cement manufacturing can be found in IEA Environmental Projects Ltd. "Deployment of CCS in the cement industry", report 2013/9 from Dec. 2013.

Established measures to reduce emission are increase of energy efficiency, utilizing alternative fuels and/or raw materials, and lower clinker to cement ratio, i.e. using supplementary cementitous materials to replace clinker in cements. Further, many proposals for alternative cements exist like geopolymer cement, belite cement made by hydrothermal treatment and binders hardening by reaction with carbon dioxide instead of or in addition to hydration. Potential of further reduction achievable with the established measures is very low and alternative cements still need lots of development activity and time to be accepted as repelacment for ordinary Portland cement(abbrevieted OPC) and OPC based composite cements in the construction sector.

One promising way to achieve further CO₂ emmission reduction is by the implementation of carbon capture technologies. These technologies are innovative methods, many of them still in development, to obtain an almost pure carbon dioxide stream from the plant off-gases that can be later stored in geological formations or used in the formation of new products. One problem is to obtain a flue gas with high carbon dioxide content. A recently developped approach uses oxycombustion, i.e. a combustion in oxygen and recirculated exhaust gas instead of air. The report mentioned before and M. Gimenez et al. "The oxycombustion option", Int. Cement Review May 2014 describe evaluations of oxyfuel calcination for making cement. However, as can be seen from the report on CCS mentioned before the exhaust gas still needs purification and carbon dioxide content is in the range from 80 to 85 Vol.-%, see e.g. table 5-19 on page 89. This range is on the high side, according to M. Gimenez et al. only 66 Vol.-% dry was achieved.

Further, there have been proposals to use fluidized bed reactors for calcination and/or sintering in the manufacturing of cement:
- J. Xu et al. "Effect of fluidized bed calcinatioin on cement clinker..." Constr. Build. Mat. 2021 proposes a circulating fluidized bed reactor for calcination and sintering
- According to FR 2797 628 (= CA 2,313,862) cement clinker is obtained as a by product from a circulating fluidized bed boiler which burns high sulfur fuels
- In US 2011/0168060 A1 it is proposed to calcine cement raw meal in an oxyfuel calciner constructed in the form of a fluidized bed reactor without recirculation of the gas
- WO 2005/026070 A1 describes a calcination in a fludized bed reactor with subsequent sintering in a kiln, wherein steam is made as a by product with the flue gas.

However, all these proposals failed to allow obtaining high purity carbon dioxide with small effort regarding energy and device requirements. It is still an object to find suitable methods and devices for manufacturing cement clinker wherein the flue gas is easily concentrated and purified for advantageous use or economic storage of the carbon dioxide.

Surprisingly it has now been found that combining an oxyfuel calcination in a calciner maintained at an overpressure of at least some mbar with sintering in an ordinary kiln is able to generate flue gas with high carbon dioxide concentration and very low impurities. When the oxygen content in the calciner is comparably low, i.e. from 1 to 3 Vol.-% dry, the carbon dioxide purity can be enhanced even more.

Thus, the mentioned object is solved by a method for manufacturing cement clinker comprising the steps:
- preheating a raw meal in a first preheater using exit gases of a rotary kiln
- further preheating in a second preheater using exit gases of a precalcination reactor to provide a preheated meal
- precalcination of the preheated raw meal in a calciner being a fluidized bed reactor or entrained flow reactor by burning fuel with oxygen and recirculated gas instead of air to provide a precalcined raw meal wherein at least 2 mbar overpressure are maintained in the calciner
- transferring the precalcined raw meal to a rotary kiln for sintering to provide the cement clinker
- cooling the cement clinker, and
- capturing carbon dioxide from a calciner exhaust gas in a carbon dioxide purification unit.
The object is further solved by a cement manufacturing plant comprising a first cyclone preheater having a raw meal feed and adapted to receive off-gas from a kiln, a second cyclone preheater adapted to receive partially preheated raw meal from the first preheater and recirculated exhaust gas from a calciner, wherein the calciner is a circulating fluidized bed reactor or an entrained flow reactor arranged to receive preheated raw meal from the second cyclone preheater and adapted to precalcine the preheated raw meal, a rotary kiln adapted to receive precalcined raw meal from the calciner for converting it into cement clinker by sintering and to pass the cement clinker to a clinker cooler, and an oxygen supply arranged to provide oxygen to the calciner, wherein the combustion atmosphere inside the calciner is made up of oxygen from the oxygen supply and recirculated exhaust gas from the calciner, and wherein the plant comprises a carbon dioxide purification unit adapted to capture carbon dioxide from the exhaust gas from the calciner.

Consequently, the invention aims at a capture of the process-CO₂ from the calcination reaction by conducting this process in a fluidized bed reactor or entrained flow reactor in the presence of oxygen and recirculated exhaust gases of the calcination to produce calciner exhaust gases with high content of CO₂ (for example > 93 Vol.%). Preferably, the off-gases of the rotary kiln are also processed with the objective of separating the carbon dioxide in the gases, especially by adsorption in a solvent based capture system, typically but not limited to in a solution comprising an amine.

Therefore, the present invention provides a further development of the oxyfuel technology that relies on the use of pure oxygen instead of air as oxidizing media for combustion to improve carbon capture technology. The main advantages of this invention over other known carbon capture concepts are:
- Generation of a flue gas stream with high CO₂ content (> 93 Vol.%, dry) before a carbon dioxide purification unit
- Minimization of false air ingress in the calciner and meal preheating stages.
- Kiln and clinker cooler can be operated in conventional air-mode
- Plant modifications are focused in the calciner, the location of higher thermal demand and where most process-CO₂ originates
- Heat integration allows to reduce thermal demand of the over-all process
- Maximization of CO₂ capture rate, treating all flue-gases of the kiln when combined with an adsorption stage
- Reduction of the electrical energy demand for the post calciner CO2 gas purification and compression.

The method and device according to the invention mostly rely on known concepts for cement clinker manufacturing. In other words, the cement plant rotary kiln section is modified as little as possible. For standard kiln conversions this is advantageous to save investment cost and avoid possibly problematic changes to the process. This is equally applicable for new installations. Since a cyclone preheater and rotary kiln are currently the most efficient setup those will normally be re-used or used. However, the concept can also be applied to other devices. Furthermore, besides the inventive oxyfuel calcination other measures to save carbon dioxide emissions as described before can and will typically be applied when manufacturing cement clinker according to the invention. Also, known measures for exhaust gas purification can and will usually be used.

The method for manufacturing cement starts with the usual raw meal preparation to provide a raw meal comprising the desired components and particle size distribution suitable for the specific device. As usual the raw meal is provided by crushing and grinding quarried materials, eventually also admixing alternative raw materials, correctives and/or fluxes/mineralizers. Depending on the balance between mill output and kiln throughput a silo for storing raw meal can be foreseen. Such a silo can also be useful for homogenization of the raw meal and is then used regardless of a need to store raw meal. As know per se, exhaust gas from the calciner and/or kiln and/or clinker cooler can be used to dry raw materials before they enter the mill.

According to the invention, raw meal is first preheated in a first cyclone preheater using kiln off-gas for preheating. Here 1, 2, 3, 4, 5 or 6 cyclones are used, preferably 1 to 3. Feeding raw meal to the first preheater and preheating with kiln off-gas can take place as usual. Final preheating is achieved in a second cyclone preheater using exhaust gas from the calciner for preheating. A second raw meal feed to the second preheater can be foreseen. Typically, in the second preheater 1, 2, 3, 4, 5 or 6 cyclones are used, preferably 3 to 5. The cyclones of the first preheater usually preheat the raw meal in oxidizing atmosphere and evaporate water, burn-off hydrocarbons and sulfur as well as other unwanted components, which have adverse effecs on the CO₂ quality. The partially preheated material is then passed to the cyclones of the second preheater.

It is also possible to use only one preheater string in which a first part is heated by kiln off-gas and a second part by calciner exhaust gas. Therein, the raw meal preheated in the first part is passed down by gravity to the second part using rotary gas locks to transfer the solids and prevent any gas transfer. The second preheater is separated with regard to gas flow from the first preheater, so only solids can circulate between the first preheater and the second preheater. The gas locks are rotary valves which have a bed of material above them preventing gas leaking from the second part of the preheater to the first part of the preheater. The material bed is attained by adjusting the speed of the rotary valve so that a desired layer of material, typically from 200 to 500 mm height, is always present. A complete withdrawal of the kiln off-gas (100 % by-pass gas) is theoretically posisble but usually not feasible, because of the very high energy loss. However, should there be high amounts of volatile elements like chlorine or potassium that need to be taken out it might be useful. In this case, only one preheater is provided and only calciner exhaust gas is used for preheating.

Preheated raw meal from both strings or from cyclones of both parts of the only one preheater string is fed to the calciner, which is an oxyfuel calciner according to the invention. That means while solids, i.e. the preheated raw meal and circulating partially precalcined raw meal, as well as fuels are fed as usual, the combustion atmosphere is made up of oxygen and circulating calciner exhaust gas. Thereby, no nitrogen is diluting the exhaust gas, which reduces investment and energy costs for carbon dioxide purification.

According invention the calciner can be a fluidized bed reactor or an entrained flow reactor. Both types of reactor have been proposed previously as calciner, most common is an entrained flow reactor. Sufficient gas flow is achieved by a partial recirculation of the calciner exhaust gas using one or preferably two fans, preferably induced draft fans. The solids can also partially circulate if needed to obtain the desired precalcination, i.e. decarbonation degree. Herein, the term fluidized bed reactor covers all devices allowing to burn a fuel supported in a gas flow so that the raw meal particles which are also suspended in the gas flow are calcined by the generated heat. In the classical fluidized bed reactor design both fuel and combustion gas as well as raw meal are fed at the lower end. Exhaust gas is withdrawn at the top and the calcined raw meal is separated from the exhaust gas in a cyclone. Another form of calcination reactor useful for the present invention is an entrained flow reactor. Similar to the prior art fuel, oxygen and raw meal are fed at the bottom. At least one cyclone from the preheater separates fine particles from the exhaust gas and passes them to the rotary kiln for sintering and formation of clinker.

To avoid non-desired air entrance (false air leakage) and thereby achieve a high concentration of the carbon dioxide and a reduced level of impurities in the calciner exhaust gas, the calciner is operated under a slight overpressure, namely with a pressure of at least 2 mbar, preferably ≥ 20 mbar, most preferred ≥ 50 mbar, above ambient pressure. Preferably, the overpressure is maintained through all the preheating cyclones. However, the zero point can also be located by induced draft-fan duty balances within the first preheater cyclones or downstream the high temperature dust collector. In contrast, the calciner in the prior art is typically an entrained flow reactor wherein the fan(s) used to provide the gas flow are always adjusted so that an underpressure results inside the calciner or at least inside the cyclones of the connected preheater. This also applies when oxyfuel calcination is used. Induced draft fans employed to adjust the gas flow through calciner and preheater are normally adjusted so that a pressure zero point lies directly after the fan. According to the present invention the fan settings are chosen so that zero point is located at least upstream of the second preheater, i.e. an overpressure is maintained in the calciner and second preheater or second part of the preheater. Preferably, fan settings are chosen so that the zero point is located upstream of an exhaust gas dedusting filter or a heat exchanger, but it is posisble to have it before the filter. Upstream is defined with regard to the solid material flow inside the plant, i.e. the first preheater is upstream of (or in parallel to) the second preheater and the second preheater is upstream of the calciner which in turn is upstream of the kiln. Further, according to the invention two fans are used to adjust distribution of the calciner exhaust between recirculation and withdrawal. The main fan is typically the one in the calciner exhaust gas recirculation loop. The second fan is usually placed after the dust filter constituting the first step in the exhaust gas cleaning occurring before the carbon capture unit.

The oxygen fed to the calciner can be preheated by the exhaust gas of the calciner enhancing the energy efficiency of the combustion. Also, if natural gas is used as fuel, this fuel can be preheated and by this the energy efficiency of the calcination process is further enhanced. The optional oxygen and/or gaseous fuel heat exchanger(s) is/are usually arranged after the second preheater cyclones. Suitable are e.g. tube type devices, which preferably have means for mechanical cleaning to maintain an efficient heat exchange.

Oxygen is supplied from a suitable source. It depends on many factors which kind of oxygen supply is optimal for a specific plant. Preferred are an air separation unit or an electrolysis, most preferred is an air separation unit. It is also possible to mix oxygen from different sources and/or use different sources at different times.

The oxygen is fed into the calciner as needed to adjust the desired concentration for combustion of the fuel. In a preferred embodiment of the invention an oxyfuel combustion in the calciner under oxygen meagre conditions, i.e. with an oxygen concentration from 1 to 3 Vol.-% in the flue gases, is foreseen. Such oxygen concentrations are achieved by adding only slightly more oxygen to the calcination than is calculated to be required for complete combustion of the fuel in the reactor. This means, oxygen content is adjusted to range from 115 mol% to 120 mol-% of the calculated demand of the fuel composition. The amount of added oxygen is usually much smaller since a significant amount is present in the circulating gas. Preferably an excess amount of oxygen in the CO₂ product gas withdrawn from the fluidized bed calciner of 2.5 mol-% or less is adjusted, preferably less if the fuel combustion properties allow so.

The fuel can be any known suitable fuel, for example natural gas, oil, coal, secondary fuels and mixtures thereof. Preferred are secondary fuels, i.e. refuse derived fuel.

To achieve a high carbon dioxide concentration the exhaust gas from the calciner is circulated. As mentioned, the oxygen needed for combustion can be preheated by the recirculated gas before reaching the calciner. The CO₂-rich gas is used to preheat the raw meal in the bottom cyclones of the preheater. A part of the gas is withdrawn and preferably passed into a hot gas dust filter, while the rest is brought back to the calciner to control the calcination temperature and to provide the needed vertical velocity to allow a stable hold-up. Fresh oxygen is fed to adjust the oxygen content as desired for a complete combustion of the fuel. Usually, from 40 Vol.-% to 65 Vol.-%, preferably from 50 Vol.-% to 65 Vol.-%, most preferred from 55 Vol.-% to 65 Vol.-%, of the exhaust gas is taken out, which lowers the electrical energy demand of the process.

Inside the calciner, preheated raw meal and the combustion atmosphere heated by burning the fed fuel are in intimate contact. Typically, the temperature ranges from 890 to 960 °C, more preferred from 900 to 940 °C, most preferred from 900 to 920 °C. Typically, residence time, recirculation rate, and temperature are adjusted to each other so that a decarbonation degree of the raw meal of at least 80 mol-% with respect to total releasable CO₂ is achieved. Preferably from 80 to 100 mol-% of the bound carbon dioxide is released from the limestone, more preferred from 85 to 100 mol-%, most preferred from 90 to 100 mol-%.

The high amount of carbon dioxide in the calciner exhaust gas facilitates carbon capture. It can be expected that the bulk of the CO₂ produced by the calcination is sequestrated. The technical demands for its purification are more on the side of O₂, SO₂ and contained water than to achieve extremely high levels of CO₂.

The precalcined raw meal is finally passed into the kiln for sintering it to obtain cement clinker. However, due to a high precalcination degree a shorter and slimmer kiln than usual may be suitable. The rotary kiln is operated as usual, i.e. typically with air from the cooler for burning the kiln fuel at one end and the precalcined raw meal slowly advancing from the other. Hot off-gas from the kiln is utilized for preheating and/or drying raw materials as known.

The calciner exhaust gas is typically treated in a manner which is advantageous for a carbon dioxide purification unit (abbreviated CPU) based CO₂ capture. Thus, usually a dedusting at high temperatures is foreseen. Thereafter a reducing of the temperature level by heat extraction is useful. The NO and NO₂ are typically reduced in the presence of NH₃ or a compound releasing it in a catalytic or non-catalytic reactor at 300 to 400 °C. If needed, an additional oxidation catalyst can be installed to burn down the carbon monoxide and remaining hydrocarbons to CO₂. The minimum oxygen content for this is 1 mol-%, ideally 1.5 mol-%. Preferably after further heat recovery, the gas is purified from acid components such as SO₂, SO₃, HF, HCI, etc., e.g. in a wet scrubber. The final gas cleaning is usually done in a direct contact cooler by adding an absorbent such as NaOH or KOH to collect the remainder of the SOₓ, HCI and HF to obtain a level of them around the limit of detection.

As a result of the exhaust gas cleaning, the calciner string CO₂ rich gas is depleted from impurities when it reaches the CPU. Optionally, an Oxycat with a hydrogen or methane feed can be installed in the CPU to reduce the O₂ content in the product gas. Any present CO will also support the O₂ depletion in the product gas by oxidation in a CO₂ purification unit with an in-built oxidation catalyst. The CPU can also comprise typically multi stages of compression, cooling, drying, filtration and cryogenic distillation. The exhaust gas from which the CO₂ has been removed is the reject stream or CPU flush gas. It is often vented. In a preferred embodiment it is transported to the rotary kiln via the clinker cooler, possibly after mixing with kiln by-pass gas or directly into the kiln burner. Typically the vent gas has a CO₂ concentration of > 15 mol-%, dry, and a remaining O₂ content of 2 mol-%, dry.

The off-gases of the rotary kiln are transported in a separate gas string and are used to preheat the raw meal in the first preheater (or first part of a single preheater). The preheating under oxidizing conditions is beneficial to burn down the pyrite to SO₂ as well as the hydrocarbons to CO₂ before these reach the oxygen meagre calciner string.

The kiln off-gas is preferably treated in a manner which is advantageous for an amine based CO₂ capture. After dedusting, and possibly also re-heating the off-gas to about 300 to 350 °C in a recuperative system, NO and NO₂ are typically reduced in the presence of NH₃ or a compound releasing it in a catalytic or non-catalytic reactor. If needed an additional oxidation catalyst can be installed to burn down the CO and remaining hydrocarbons. The gas is further usually purified from acid components such as SO₂, SO₃, HF and HCI in a scrubber, preferably a wet scrubber, before passing to a direct contact cooler. The final gas cleaning is done e.g. in a direct contact cooler by adding an absorbent such as NaOH or KOH to collect the remainder of the acid components, especially SOₓ, HCI and HF, to a level around the limit of detection. Preferably, a post combustion carbon capture system, for example using amine solvents, is used in the kiln gas string to capture its remaining CO₂ content. The necessary heat for regeneration of the solvent can be provided by heat extraction from the calciner exhaust gases and/or the clinker cooler vent gases.

In one embodiment the purified CO₂ from the kiln off-gas and the purified CO₂ from the calciner exhaust gas are combined to provide a single purified CO₂ stream. Depending on the level of purification achieved in the kiln off-gas cleaning and the specific carbon dioxide capture system used for the calciner exhaust gas it can also be suitable to mix the cleaned kiln off-gas with the calciner exhaust gas before the carbon dioxide capture system for the calciner exhaust gas.

The invention will be illustrated further with reference to the appended figures, without restricting the scope to the specific embodiments described. The invention includes all combinations of described and especially of preferred features that do not exclude each other. If not otherwise specified any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit. The term "substantially free" means that a particular material is not purposefully added to a composition, and is only present in trace amounts or as an impurity. As used herein, unless indicated otherwise, the term "free from" means that a composition does not comprise a particular material, i.e. the composition comprises 0 weight percent of such material.

In the figures
Fig. 1 shows a first embodiment of a plant according to the invention and
Fig. 2 shows a second embodiment.
In the figures, the same reference numbers are used for analogous parts. Gas streams are depicted in broken lines and solid streams in solid lines. To enhance clarity of the figures not all units of the plants as well as gas streams and solid streams are shown.

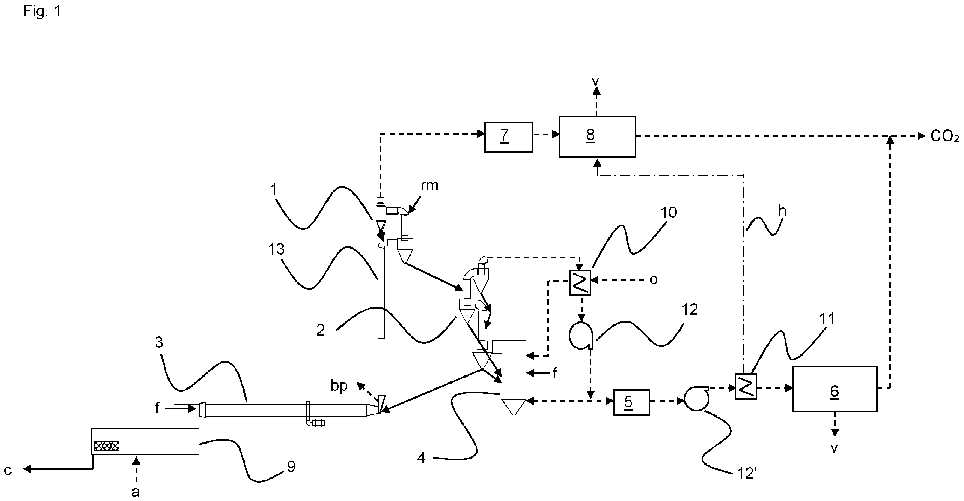

In figure 1 a cement production plant with a fluidized bed calciner operated in oxyfuel combustion and a carbon capture is depicted. A cyclone preheater 1 with two cyclones preheats the raw meal feed rm using the gas originating from combustion of fuels f in the rotary kiln 3. The partially preheated material enters a second cyclone preheater 2 with three cyclones that uses hot gases originating from the combustion of fuels f in the calciner 4 for further preheating. The preheated material is then introduced in the calciner 4, which is a fluidized bed reactor or entrained flow reactor operated in slight overpressure. Precalcined raw meal is fed to the rotary kiln 3 and the cement clinker c obtained is cooled in clinker cooler 9, which is operated with air a.

The exhaust gas from the calciner 4 is used in the second preheater 2 to further preheat the partially preheated raw meal from the first preheater 1 and also to preheat an oxygen stream o inside a heat exchanger 10. A portion of the exhaust gas is recirculated to the calciner 4 and together with the oxygen stream o is used to burn fuel f in the calciner 4, while the rest is passed to an exhaust gas cleaning system 5. The gas flow in the calciner 4 and in the second preheater 2 is controlled by adjusting the duty balance of the two fans 12 and 12' which are located inside the calciner exhaust gas circulation loop and after the calciner exhaust gas cleaning system 5, respectively.

The exhaust gas cleaning system 5 for the CO₂-rich exhaust gas from the calciner 4 includes one or more of the following units: dust collection, NOₓ reduction, dry/wet desulfurization, and water removal. A heat exchanger 11 cools the withdrawn calciner. A CO₂ purification unit 6 eliminates the remaining impurities through a vent stream v, while the purified CO₂ stream is obtained ready for transport or storage.

Kiln off-gas is split as usual into by-pass gas bp and gas used to preheat raw meal rm in the first preheater 1. For this, it is passed into the lowest preheater cyclone via a riser duct 13. By-pass bp gas can be used as known and could also be zero. The exhaust gas cleaning system 7 for the off-gas from the kiln 3 includes one or more of the following units: dust collection, NOₓ reduction, dry/wet desulfurization, and water removal. The CO₂ capture system 8 is an amine based system or a similar capture method. Part or all the heat h needed for the regeneration of the solvent is extracted from the exhaust gas stream of the calciner 4 in heat exchanger 11.

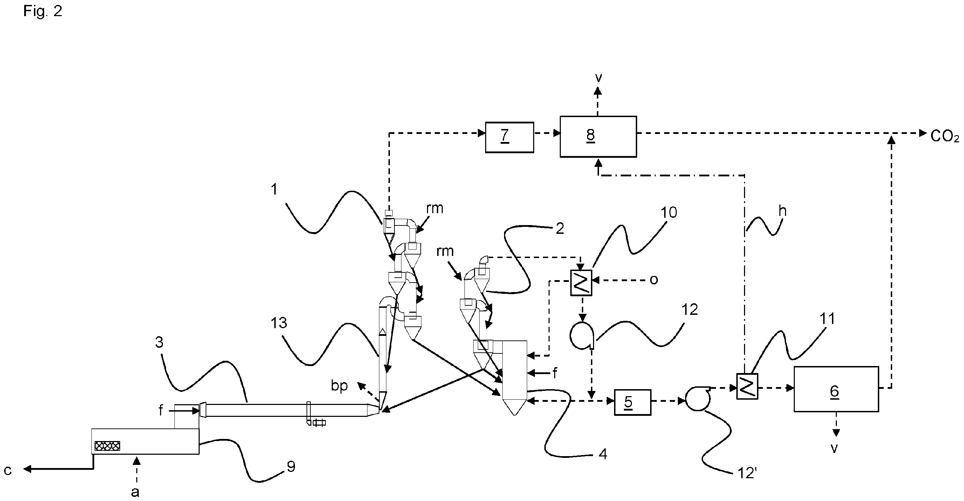

Fig. 2 shows another embodiment of a cement production plant with a fluidized bed reactor as calciner 4 operated in oxyfuel mode. Therein the preheater and calciner section is arranged different from that in figure 1, the other parts are unchanged. A cyclone preheater 1 preheats a first portion of the raw meal rm using the gases originating from combustion of fuels f in the rotary kiln 3. A second raw meal feed introduces additional raw meal rm to the second preheater 2 where exhaust gas from the calciner 4 is used for preheating. The preheated material from the first preheater 1 and the second preheater 2 is introduced into the calciner 4, which is a circulating fluidized bed reactor or entrained flow reactor operated in overpressure. The gases of the kiln line do not mix with the gases of the calciner line. Precalcined raw meal is fed to the rotary kiln 3 and the cement clinker c obtained is cooled in clinker cooler 9 operating with air a.

The exhaust gas from the calciner 4 is used in the second preheater 2 to preheat the rest of the raw meal rm and also to preheat an oxygen stream o in a heat exchanger 10. A portion of the calciner exhaust gases is recirculated to the calciner 4 using a fan 12 and together with the oxygen stream o is used to burn fuels f in the calciner 4, while the rest is passed to an exhaust gas cleaning system 5 with the help of fan 12'.

The exhaust gas cleaning system 5 for the CO₂-rich exhaust gas from the calciner 4 includes one or more of the following units: dust collection, NOₓ reduction, dry/wet desulfurization, and water removal. A CO₂ purification unit 6 eliminates the remaining impurities through a vent stream v, while the purified CO₂ stream is obtained ready for transport or storage.

The exhaust gas cleaning system 7 for the off-gas from the kiln 3 includes one or more of the following units: dust collection, NOₓ reduction, dry/wet desulfurization, and water removal. The CO₂ capture system 8 is an amine based system or a similar capture method. Part or all the heat needed for the regeneration of the solvent is extracted from the exhaust gas stream of the calciner 4 in a heat exchanger 11.

### List of reference numbers

- 1: cyclone preheater
- 2: second cyclone preheater
- 3: rotary kiln
- 4: calciner
- 5: calciner exhaust gas cleaning unit
- 6: carbon dioxide purification unit
- 7: kiln exhaust gas cleaning unit
- 8: carbon dioxide capture system
- 9: clinker cooler
- 10: heat exchanger
- 11: heat exchanger
- 12, 12': induced draft fans
- 13: riser duct
- a: air
- bp: by-pass gas
- c: cement clinker
- f: fuel
- h: heat
- o: oxygen
- rm: raw meal feed
- v: vent stream

## Claims

1. Method for manufacturing cement clinker comprising the steps:
- preheating a raw meal in a first preheater using kiln off-gas to provide a partially preheated raw meal
- preheating the partially preheated raw meal in a second preheater to provide preheated raw meal
- precalcination of the pre-heated raw meal in a calciner being a fluidized bed reactor or entrained flow reactor by burning fuel with oxygen and recirculated calciner exhaust gas instead of air to provide a precalcined raw meal wherein at least 2 mbar overpressure are adjusted in the calciner
- transferring the precalcined raw meal to a rotary kiln for sintering to provide the cement clinker
- cooling the cement clinker, and
- capturing carbon dioxide from a calciner exhaust gas in a carbon dioxide purification unit.

2. Method according to claim 1, wherein an oxygen concentration from 1 to 3 Vol.-% dry is adjusted in the calciner.

3. Method according to claim 1 or 2, wherein the calciner exhaust gas is purified in a calciner exhaust gas cleaning unit and/or a carbon dioxide purification unit.

4. Method according to claim 4, wherein the the calciner exhaust gas is subjected to compression and optionally to one or more of the following steps in the carbon dioxide purification unit: cooling, drying, filtration, and/or cryogenic distillation.

5. Method according to claim 3 or 4, wherein the calciner exhaust gas is subjected to one or more of the following steps in the calciner exhaust gas cleaning unit:
- dedusting at high temperatures,
- reducing of the temperature level by heat extraction,
- reduction of NO and NO₂ in the presence of NH₃ or a compound releasing it in a catalytic or non-catalytic reactor at 300 to 400 °C,
- burning down carbon monoxide and hydrocarbons to CO₂ at an oxidation catalyst,
- additonal heat recovery,
- purification from acid components in a scrubber,
and/or
- cleaning in a direct contact cooler by adding an absorbent.

6. Method according to one of claims 1 to 5, wherein the kiln off-gas is cleaned by passing through a mill for grinding raw materials to provide the raw meal and/or a raw material feed.

7. Method according to one of claims 1 to 6, wherein the kiln off-gas is dedusted and/or NO and NO₂ contained are reduced in the presence of NH₃ or a compound releasing it in a catalytic or non-catalytic reactor, and/or volatile organic compounds contained are burned down to CO₂ and/or SOₓ contained is adsorbed on the raw meal during preheating, adsorbed on a raw material when drying it and/or scrubbed from the gas with a scrubbing device.

8. Cement manufacturing plant comprising a first cyclone preheater (1) having a raw meal feed and adapted to receive off-gas from a rotary kiln (3), a second cyclone preheater (2) adapted to receive partially preheated raw meal from the first preheater (1) and recirculated exhaust gas from a calciner (4), wherein the calciner (4) is a fluidized bed reactor or an entrained flow reactor and the calciner (4) is arranged to receive preheated raw meal from the cyclone preheater (2) and adapted to precalcine the preheated raw meal, a rotary kiln (3) adapted to receive precalcined raw meal from the calciner (4) for converting it into cement clinker by sintering and to pass the cement clinker to a clinker cooler (9), and an oxygen supply arranged to provide oxygen to the calciner (4), wherein the combustion atmosphere inside the cacliner (4) is made up of oxygen from the oxygen supply and recirculated exhaust gas from the calciner (4), and wherein the the plant comprises a carbon dioxide purification unit (6) adapted to capture carbon dioxide from the exhaust gas from the calciner (4).

9. Cement manufacturing plant according to claim 8, wherein the plant additionally comprises a calciner exhaust gas cleaning unit (5) which preferably comprises on or more of
- a dust filter for dedusting at high temperatures,
- a heat exhnager for reducing the temperature level by heat extraction,
- a catalytic or non-catalytic reactor for reduction of NO and NO₂ at 300 to 400 °C in the presence of NH₃ or a compound releasing it,
- an oxidation catalyst for burning down carbon monoxide and hydrocarbons to CO₂,
- a scrubber, preferably a wet scrubber, for purification from acid
components,
and/or
- a direct contact cooler for cleaning by adding an absorbent.

10. Cement manufacturing plant according to claim 8 or 9, wherein the plant additionally comprises a kiln off-gas cleaning unit (7) and/or a carbon dioxide capture system (8).
